# EUROPÄISCHE PATENTSCHRIFT

(11) **EP 0 596 052 B1**
(45) Veröffentlichungstag und Bekanntmachung des Hinweises auf die Patenterteilung: **28.05.1997**
(21) Anmeldenummer: 93905243.7
(22) Anmeldetag: 12.02.1993
(51) Int. Cl.: B01D 21/24, E03F 5/14, E03F 5/16

(54) **VERFAHREN UND EINLAUFVORRICHTUNG ZUR BESCHICKUNG VON FLACHSANDFÄNGEN BZW. ABSETZBECKEN/NACHKLÄRBECKEN**
METHOD AND INLET DEVICE FOR FEEDING FLAT SAND TRAPS AND SETTLING TANKS/SECONDARY SETTLER
PROCEDE ET DISPOSITIF D'ENTREE POUR L'ALIMENTATION DE DESSABLEURS PLATS OU DE BASSINS DE DECANTATION/BASSIN DE DECANTATION FINALE

(30) Priorität: 15.04.1992 DE 4212631
(43) Veröffentlichungstag der Anmeldung: 11.05.1994
(73) Patentinhaber: FELDER, Anton, D-87435 Kempten (DE)
(72) Erfinder: FELDER, Anton, D-8000 München 90 (DE); VALENTIN, Franz, D-8000 München 2 (DE)
(74) Vertreter: Lewald, Dietrich, Dipl.-Ing.
(86) Internationale Anmeldenummer: EP9300349
(87) Internationale Veröffentlichungsnummer: WO9320918

(56) Entgegenhaltungen:
- DE-A- 2 051 021
- DE-B- 1 142 798
- DE-U- 9 112 947
- US-A- 3 945 920
- US-A- 3 972 814

## Beschreibung

Die Erfindung betrifft eine Einlaufvorrichtung zur Beschickung Von Flachsandbecken mit Abwasser mit einer Zuleitung in und einer Zuleitung aus einem rechteckigen Becken.

Gegenstand der Erfindung ist auch eine Einlaufvorrichtung zur Beschickung von Absetzbecken / Nachklärbecken.

Die Erfindung richtet sich einerseits auf ein Verfahren zur Beschickung von solchen Flachsandfängen und hat auch ein Verfahren zur Beschickung solcher Absetzbecken zum Gegenstand.

Zur Sandabscheidung aus dem Abwasser werden in bekannter Weise auf Kläranlagen Sandfänge mit dem Ziel eingesetzt, unabhängig von Schwankungen des Abwasserzuflusses einen sauberen, d.h. einen von organischen Beimengungen weitgehend freien Sand zu erhalten. Gemeinsam ist diesen Sandfangkonstruktionen unterschiedlichster Ausführung, daß sie zur Trennung von Sanden aus Abwasser die Schwerkraft (bei Flachsandfang) oder die Schwer- und Zentrifugierkraft (bei Hydrozyklonen und Rundbecken) ausnutzen. Der Vorteil der zuletzt genannten Sandfänge gegenüber denen nach dem reinen Schwerkraftprinzip ist hinsichtlich des Klassiereffektes wegen der relativ geringen Radialbeschleunigung jedoch nicht zu hoch zu bewerten. Der Sand scheidet sich im wesentlichen unter dem Einfluß der Schwerkraft ab. Die durch die Formgebung dieser Sandfänge erzwungene Kreis- und Spiralbewegung des Abwassers wird vorwiegend zum Feststofftransport in den Sandsammelraum benutzt.

Der technologische Hintergrund für den Bau von Flachsandfängen ist, daß die mineralischen Bestandteile bis zu einer Trenngröße dp ≥ 0,1 bis 0,2 mm aus dem Abwasser zu entfernen sind, während die organischen Komponenten zu den nachgeschalteten Reinigungsstufen weitertransportiert werden sollen. Dazu werden überwiegend Flachsandfänge benutzt. Die Beschickung der Flachsandfänge erfolgt horizontal über eine Rohrleitung. Oft werden dann im Einlaufbereich zur Vergleichmässigung der Strömung Gitter oder Prallplatten angebracht, die aber nach Dr.-Ing. H. Patt (Institut für Wasserwesen, Universität der Bundeswehr München, 1990, ISSN 0720-1273) keinen Einfluß auf den Gesamtrückhaltefaktor haben. Bei der horizontalen Durchströmung des Flachsandfangs werden dann die im Abwasser enthaltenen organischen Partikel mit Hilfe der Schwerkraft über die unterschiedlichen Sinkgeschwindigkeiten getrennt. Für den Absetzvorgang ist je nach Zuflußmenge eine Mindestlänge des Sandfanges notwendig, die nach Camp über die Bemessung der Oberflächenbeschickung ermittelt werden kann.

Andererseits wird nicht verkannt, daß es bei Absetzbecken bekannt ist, diese von einem Zulaufkanal aus über eine bestimmte Anzahl von Einlaufrohren zu beaufschlagen. Beim Absetzbecken geht es darum, möglichst schnell eine gleichmäßige und geringe Strömung zu erreichen.

Der Erfindung liegt die Aufgabe zugrunde, eine konstruktiv einfache Vorrichtung zur Beschickung von Flachsandfängen durch Abwasser einerseits, zu Beschickung von Absetzbecken durch Abwasser andererseits zu schaffen, mittels welcher bei gleicher Beaufschlagung die bisher benötigte Sandfanglänge für den Absetzvorgang um bis zu 50% verringert werden kann; bzw. zusätzlich bei Absetzbecken bei gleicher Beaufschlagung und Beckengröße wie bisher der hydraulische Wirkungsgrad von 50 auf bis zu 90% erhöht werden kann.

Erreicht wird dies erfindungsgemäß bei einer Einlaufvorrichtung zur Beschickung von Flachsandfängen mit Abwasser mit einer Zuleitung in und einer Ableitung aus einem rechteckigen Becken überraschend dadurch, daß der Zulauf zum Becken als Einlaufkammer mit einer Bodenplatte ausgebildet ist, an der eine über die gesamte Sandfangbreite gehende ihr gegenüber verstellbare Steuerplatte gelagert ist, die mit einem ihr horizontal gegenüberliegend angeordneten Umlenkzylinder einen verstellbaren Auslaufspalt bildet.

Gelöst wird diese Aufgabe bei einer Einlaufvorrichtung zur Beschickung von Absetzbecken (Nachklärbecken), unter Ausnutzung des Coanda-Effekts, mit Abwasser mit einer Zuleitung am Boden des Beckens in und einer Ableitung aus einem rechteckigen Becken, dadurch, daß der Zulauf zum Becken als Einlaufkammer ausgebildet ist, an deren Ausgang eine über die gesamte Absetzbeckenbreite gehende ihr gegenüber verstellbare Steuerplatte gelagert ist, die mit einem ihr horizontal gegenüberliegend angeordneten nach oben gehenden und von der Zuleitung weggerichteten Umlenkbogen einen verstellbaren Auslaufspalt in das Becken bildet. dadurch, daß der Zulauf zum Becken als Einlaufkammer ausgebildet ist, an deren Ausgang eine über die gesamte Absetzbeckenbreite gehende ihr gegenüber verstellbare Steuerplatte gelagert ist, die mit einem ihr der Steuerplatte gegenüberliegend angeordneten Umlenkbogen einen verstellbaren Auslaufspalt in das Absetzbecken bildet.

Zweckmäßig ist die Einlaufkammer beim Flachsandfang im Bereich des Zylinders nach oben hin geschlossen ausgebildet.

Im allgemeinen ist der Umlenkzylinder über die Breite des Sandfanges als eigener Körper ausgebildet. Eine zweckmäßige Ausbildung für Sandfänge zeichnet sich aus durch Ausnutzung des Coanda-Effekts, derart, daß eine Umlenkung des horizontal in die Vorkammer einfließenden Abwassers zunächst vertikal nach unten und dann wieder zumindest in die Horizontale oder vertikal nach oben erfolgt.

Es wird nicht verkannt, daß an sich Verfahren bekannt sind, die unter Ausnutzung der Schwer- und Zentrifugalkraft eine Abtrennung der mineralischen Bestandteile aus dem Abwasser bewirken. Nicht jedoch bei Flachsandfängen und unter Ausnutzung des sogenannten Coanda-Effekts.

Bekanntlich sind die Abmessungen der Flachsandfänge an den Zufluß und die schwerkraftbedingte Sedimentation gekoppelt. Aufgrund der vermehrten Abwasseraufkommen werden die Sandfänge daher zwangsweise immer größer. Dem steht aber oft der mangelnde Platzbedarf auf den Kläranlagen gegenüber. Hier bedeutet die Maßnahme der Erfindung einen überraschenden Schritt nach vorne.

Die mit der Erfindung erzielten Vorteile bei Flachsandfängen bestehen insbesondere darin, daß die Umlenkung und Führung der flüssigen Phase nach dem Austritt aus dem Spalt an der Berandung des Zylinders unter Ausnutzung des Coanda-Effekts erfolgt und daher exakt vorhersagbar ist. Zugleich wirkt neben der Schwerkraft auf die in der flüssigen Phase mitgeführten mineralischen Bestandteile durch die Umlenkung am Zylinder eine Zentrifugalkraft. Entgegen diesen Kräften wirken nur eine aus der Strahkrümmung resultierende sehr kleine Druckkraft, die zum Drehzentrum hin gerichtet ist. Die Sandkörner werden daher bei der Umlenkung der flüssigen Phase zwangsweise aus ihr herausgeschleudert und sinken sofort in Richtung Sandfangboden ab. Desweiteren sind die dabei ablaufenden physikalischen Vorgänge vorhersagbar.

Beim Absetzbecken stellt sich aufgrund der Einlaufvorrichtung ein Walzensytem ein, welches einerseits durch den umgelenkten Strahl induziert wird und andererseits den Strahl nach dem Verlassen der Führungskonstruktion in Richtung der Oberfläche lenkt. Dieses im Fachgebiet "Hochklappen" des Strahls genannte Phänomen wird in der Natur die etwas höhere Dichte des Schlamm-Wassergemisches und damit die Tendenz des Abtauchens zusätzlich kompensieren.

Der Vorteil der Einlaufvorrichtung beim Absetzbecken ist, daß ein genau vorhersagbares Geschwindigkeitsprofil am Ende der Führungskonstruktion geschaffen wird. Damit ist genau bekannt, wie der eigentliche Sedimentationsraum angeströmt wird. Idealerweise verläßt das Schlamm-Wassergemisch die Einlaufvorrichtung horizontal an der Grenze zwischen Trenn- und Speicherzone.

Die oben genannte Aufgabe, daß beim Absetzbecken bei gleicher Beaufschlagung der hydraulische Wirkungsgrad von 50 auf bis zu 90% erhöht wird, wird voll erreicht.

Allgemein versteht man unter "Coanda-Effekt" die Ablenkung eines Strahls zu einer gekrümmten Wand hin. Das Anlegen beruht auf einer Unterdruckwirkung im Bereich des wandseitigen Strahlrandes.

Ausgenutzt wurde der Coanda-Effekt bereits in einer Beschickungsvorrichtung für Rundbecken durch Abwasser (GG 91 12 947.8). Hier handelte es sich um ein zentrisch in der Mitte zum Rundbecken angeordnetes, sich trompetenförmig aufweitendes Rohr, in dessen Mitte ein umströmter Kern mit einer verstellbaren Steuerplatte vorgesehen war.
Eine Übertragung dieser Konstruktion auf Maßnahmen für Rechteckbecken ist nicht möglich und nicht sinnvoll. Die Probleme sind anders. Im übrigen wurde der Coanda-Effekt dort ausschließlich zur gleichmäßigen Verteilung von Abwasser über einen rotationssymmetrischen Körper, im übrigen nicht für einen Flachsandfang, benutzt. Eine Einlaufkammer im Sinne der hier vorgestellten Maßnahmen findet sich dort nicht.

Es wird nicht verkannt, daß bei quer durchströmten Absetzbecken mit beweglichen Zwischenböden bereits ein Einlauf mit Coanda-Effekt vorgeschlagen wurde, ohne eine genaue konstruktive Ausbildung anzugeben (DE-OS 20 51 021). Eine Einlaufkammer mit Steuerscheibe und zwangsweiser Spaltausströmung unter Ausnutzung des Coanda-Effekts ist nicht Gegenstand der DE-OS, die im übrigen zu keinem Patent geführt hat. Die Lehre in der DE-OS geht im übrigen nicht über die des Basispatents von Henry Coanda, DE-PS 792 754 vom 10.6.1936, hinaus.

Aber auch die oben genannte Aufgabe wird beim Flachsandfang voll gelöst, der in der Länge um bis zu 50% kürzer gebaut werden kann, und dies bei gleicher Beaufschlagung. Damit wird wesentlich weniger Platz, was bei der Enge in dicht besiedelten Ländern einen immer größeren Vorteil bedeutet, verbraucht. Somit wird ein sogenannter "Kompaktsandfang" zur Verfügung gestellt.

Nach einer vorteilhaften Ausführungsform der Erfindung (Flachsandfang) kann durch Variieren des Umlenkwinkels β des Zylinders gezielt die Richtung des in den Flachsandfang einfließenden Strahls beeinflußt werden, da der geometrische Ablösepunkt exakt vorgebbar ist. Dadurch ist eine weitere Möglichkeit geschaffen, den Sedimentationsprozeß zu verstärken. Bei entsprechendem Potentialunterschied (Differenz Wasserspiegel der Einlaufkammer - Wasserspiegel des Sandfangs) bzw. dem Verhältnis Radius R des Zylinders zur Spaltbreite können an der Berandung des Zylinders Umlenkungen von bis zu 180° erreicht werden. Wichtig ist, daß es die Vorrichtung nach der Erfindung möglich macht, die Austrittsfläche des Spaltes durch Austausch der Steuerplatte zu verändern. So ist es möglich, nachträglich auf einfache Weise Anpassungen an betriebliche Änderungen vorzunehmen. Dies gilt in entsprechender Anwendung auch für das Absetzbecken.

Eine zweckmäßige Ausgestaltung ist in weiteren Unteransprüchen gegeben. Zweckmäßig wird in der Einlaufkammer für Flachsandfänge über deren Breite ein Rechen angeordnet. Dadurch werden Grobstoffe zurückgehalten, was verkürzte Vorklärzeiten ermöglicht und andererseits eine Vergleichmässigung der Strömung in der Vorkammer bewirkt.

Die Verhältnisse in der Einlaufkammer für Flachsandfänge lassen sich besonders vorteilhaft dadurch steuern, daß die Steuerplatte voll verstellbar ausgebildet ist, also positionsveränderlich einmal gegenüber der Bodenplatte, an der sie gelagert ist, und einmal gegenüber dem Zylinder ist.

Gegenstand der Erfindung ist auch ein Verfahren zur Beschickung von Flachsandfängen durch Abwasser. Dieses Verfahren zeichnet sich dadurch aus, daß der Coanda-Effekt zur Trennung des mineralischen Anteils und zur verzögerten gleichförmigen Einleitung herangezogen wird.

Vorzugsweise wird die flüssige Phase am konvexen Körper zur Umlenkung gebracht und es wird bei Flachsandfängen den mineralischen Bestandteilen eine Fliehkraft erteilt.

Werden nach diesem Verfahren insbesondere Absetzbecken mit Abwasser unter Ausnutzung des Coanda-Effekts aus einem Zulauf beschickt, so wird das Abwasser erfindungsgemäß aus diesem Zulauf über unter gleichmäßigem Horizontalabstand angeordnete Einlaufrohre einer insbesondere in die gesamte Beckenbreite gehenden Einlaufkammer zugeführt und aus dieser als Spaltströmung gleichmäßig herausgeführt, wobei der Coanda-Effekt zur Trennung der in der flüssigen Phase mitgeführten mineralischen Bestandteile und zur verzögerten gleichförmigen Einleitung in das Becken herangezogen wird.

Beispielsweise Ausführungsformen der Erfindung sollen nun mit bezug auf die beiliegenden Zeichnungen näher erläutert werden. Diese zeigen in:
den Figuren 1 - 4 Einlaufvorrichtungen für Flachsandfänge und Figur 5 eine solche für Absetzbecken.

Genauer zeigt
- Figur 1: eine schematische Ansicht einer ersten Ausführungsform;
- Figur 2: eine Draufsicht zur Figur 1;
- die Figuren 3 und 4: Varianten und Ergänzungsmöglichkeiten zur der in Figur 1 gezeigten Ausführungsform und
- Figur 5: eine schematische Ausführungsform für Absetzbecken/Nachklärbecken

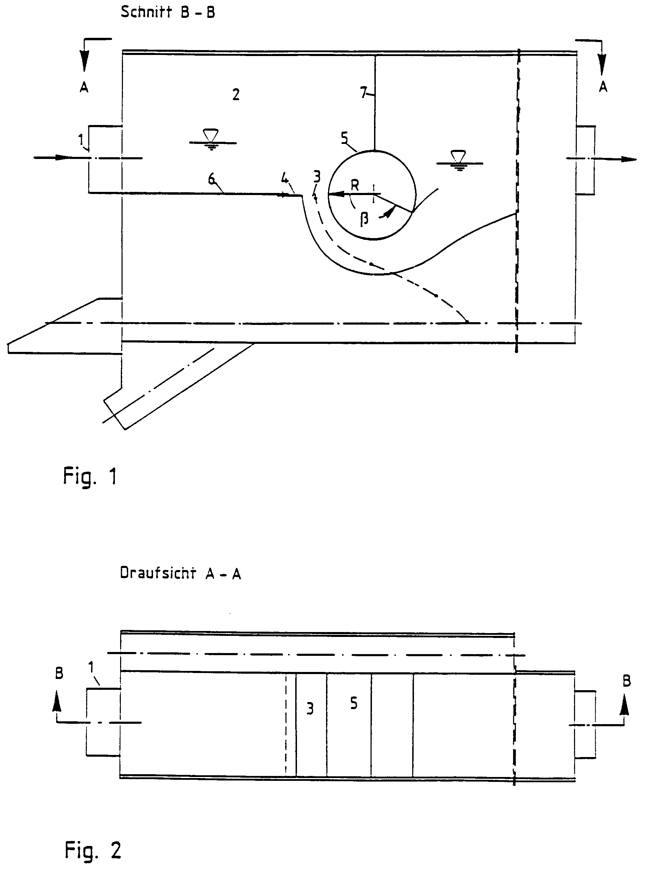

Nach der in den Fig. 1 und 2 dargestellten Ausführungsform der Erfindung fließt das Abwasser horizontal durch die Einlaufrohrleitung 1 in eine Einlaufkammer 2. Am Ende der Einlaufkammer 2 befindet sich ein Spalt 3, der durch eine Steuerplatte 4 und einen horizontal gegenüberliegenden Zylinder 5 vom Radius R gebildet ist. Die Befestigung der Steuerplatte 4 erfolgt verstellbar an der horizontalen Bodenplatte 6 der Einlaufkammer 2. Der Umlenkzylinder 5 befindet sich unterhalb der Abschlußwand 7 der Einlaufkammer 2. Das Abwasser tritt durch den Spalt 3, aus diesem aus und wird am Umlenkzylinder 5 abgelenkt und erreicht schließlich den (wieder) horizontalen Ablauf. Die Bahn ist wie in der Zeichnung durch den Pfeil in etwa angedeutet. Die in der Flüssigkeit mitgeführten mineralischen Bestandteile folgen in etwa dem als gestrichelte Kurve eingezeichneten Bahnverlauf unter der Wirkung von Schwerkraft und Zentrifugalbeschleunigung.

Nach der Darstellung ist die Einlaufkammer durch eine vertikale Wand zwischen Kammeroberseite und Zylinder geschlossen. Das Abwasser wird unter Einfluß des Coanda-Effektes zur gekrümmten Wand hin abgelenkt, was auf der Unterdruckwirkung im Bereich des wandseitigen Strahlrandes auf das Abwasser beruht.
Figur 1 stellt Schnitt B-B durch Fig. 2 dar,
Figur 2 ist die Draufsicht auf Fig. 1 gemäß den Pfeilen A-A.

Figur 2 läßt erkennen, daß der Spalt über die gesamte Breite geht und daß der Zylinder ebenfalls über die gesamte Breite gelagert ist, so daß die Abwasserführung unter dem Zylinder durch zwangsweise zu erfolgen hat, da ja bei grossem Aufstau eine Strömung über den Zylinder durch die Wandung 7 verhindert wird.

Aus Gründen des Strömungsverlaufs und der unvermeidlichen Verluste sind die Freiflächen vor und hinter dem Zylinder wie in Fig. 1 zu sehen (haben unterschiedliche Höhen).

Entscheidend ist der Umlenkwinkel β (siehe Fig. 1),der es ermöglicht, gezielt die Richtung des in den Flachsandfang eintretenden Strahls zu beeinflussen.

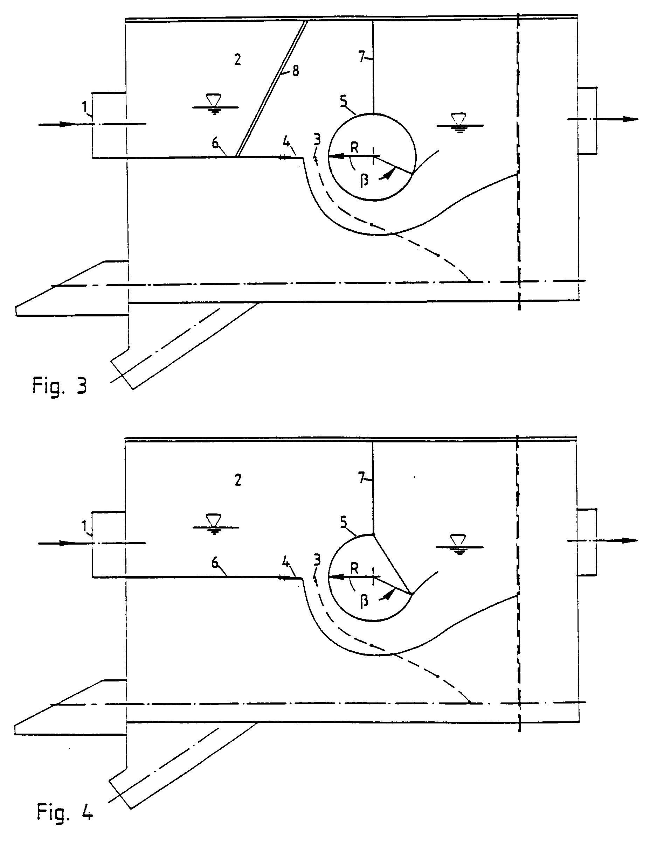

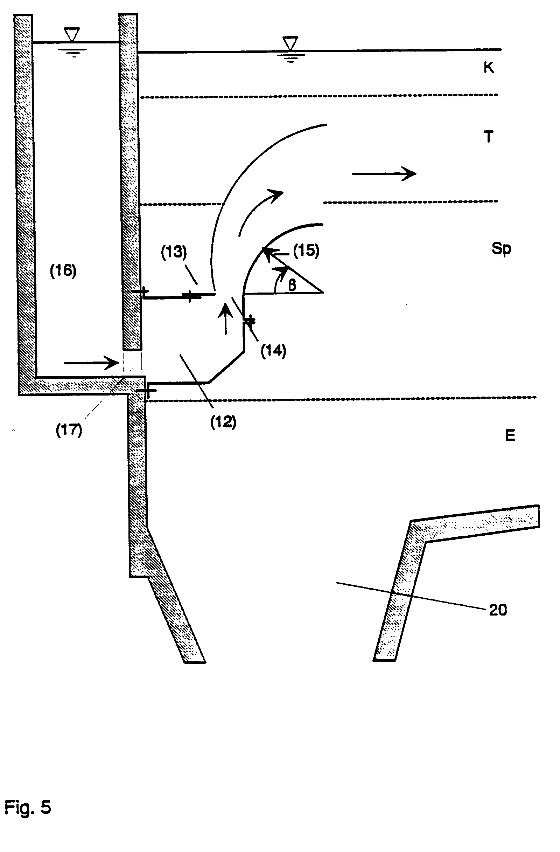

Wie der geometrische Ablösepunkt vorgebbar ist, ist gut in Fig. 3 zu erkennen, wie er verändert werden kann, zeigt Fig. 4.

In den Fig. 3 und 4 sind für die gleichen Elemente die gleichen Bezugszeichen verwendet.

Figur 3 zeigt eine Ausführungsform in Verbindung mit einem Rechen 8. Die in dem über das Rohr 1 einfließenden Abwasser befindlichen Grobstoffe werden am Rechen zurückgehalten, ausserdem wird eine Gleichrichtung der Strömung in der Einlaufkammer 2 erreicht.

Figur 4 zeigt eine abgewandelte Ausführungsform des Umlenkzylinders 5. Durch Variation des Umlenkwinkels β kann der geometrische Ablösepunkt der flüssigen Phase vorgegeben und damit auch der Strömungsverlauf im verkürzten Sandfangbecken beeinflußt werden. Der Zylinder ist hierbei kalottenartig zum geometrischen Ablösepunkt hin abgeschnitten.

Die in Figur 5 dargestellte Einlaufvorrichtung für Absetzbecken zur Verzögerung und gleichmäßigen Verteilung des Schlamm-Wassergemisches bei rechteckigen Nachklärbecken besteht aus einer über die gesamte Beckenbreite gehenden Einlaufkammer 12, an deren Oberseite sich ein durch eine Steuerplatte 13 veränderbarer Auslaufspalt befindet. Gegenüber der Steuerplatte schließt als unmittelbare Fortsetzung des Spaltes 14 ein Umlenkbogen 15 an. Die Einlaufkammer 12 wird in der Regel von einem Zulaufkanal 16 aus über eine bestimmte Anzahl von Einlaufrohren 17 beaufschlagt. In der Einlaufkammer 12 kommt es durch die starke Verzögerung und Druckumlagerung vor dem Auslaufspalt 14 zu einer Vergleichmäßigung der Spaltströmung. Der aus dem Auslaufspalt 14 austretende Strahl wird nun aufgrund des Coanda-Effekts an der konvex gekrümmten Führungskonstruktion 15 umgelenkt. Während der Umlenkung wird der Strahl durch die Einmischung von Flüssigkeit an der freien Strahlgrenze sehr stark aufgeweitet. Als Folge kommt es zu einer Verminderung des Dichteunterschiedes zwischen Eintrittsstrahl und Beckenströmung sowie zu einer Verringerung der Geschwindigkeit und damit von kinetischer Energie. Unabhängig von der Durchflußmenge bleibt die Form der Geschwindigkeitsprofile und die Strahlaufweitung erhalten (Ähnlichkeitsprinzip).

Oberhalb der Einlaufvorrichtung (12-15) stellt sich ein Walzensystem ein, welches einerseits durch den umgelenkten Strahl induziert wird und andererseits den Strahl nach dem Verlassen der Führungskonstruktion in Richtung der Oberfläche lenkt. Dieses Hochklappen des Strahls kompensiert ja, wie oben erwähnt, die etwas höhere Dichte des Schlamm-Wassergemisches.

Durch die Maßnahme insbesondere der Ausführungsform der Figur 5 wird ein genau vorhersagbares Geschwindigkeitsprofil am Ende der Führungskonstruktion 15 im Absetzbecken geschaffen. Damit ist genau bekannt, wie der eigentliche Sedimentationsraum angeströmt wird. Idealerweise verläßt das Schlamm-Wassergemisch die Einlaufvorrichtung horizontal an der Grenze zwischen Zone T (Trennzone) und Zone Sp (Speicherzone). Bekanntlich findet sich oberhalb der Trennzone die Zone K (Klarwasserzone), unterhalb der Speicherzone die Zone E (Eindickzone), bevor ein Schlammtrichter 20 in an sich bekannter Weise für Sammeln und Abzichen sorgt.

Die Einlaufkammer 12 kann unterschiedliche Größe und Form haben. Gewöhnlich wird sie am Boden des Absetzbeckens auch in Höhe des Bodens des Zulaufs angeordnet und direkt über die Einlaufrohre ebenfalls an ihrem Boden beaufschlagt. Anordnung an anderer Stelle ist möglich, wichtig ist, daß die Forderung erfüllt wird, daß das Schlamm-Wassergemisch die Einlaufvorrichtung horizontal an der Grenze zwischen Trenn- und Speicherzone verläßt. Die Einlaufvorrichtung ist in ihrem Bodenbereich eckig dargestellt. Geschwungene Übergänge sind natürlich möglich. Der Austritt aus der Einlaufkammer kann über die Steuerplatte 13 beliebig variiert werden, wichtig ist nur, daß der Strahl sich an den Umlenkbogen 15 anlegt, die Einlaufkammer im Einlaufbereich gegen das Absetzbecken geschlossen ist und der Spalt 14 in eine diffusorartig sich öffnende Konstruktion übergeht. Die Einlauföffnungen 17 können auch nach anderen Vorgaben entsprechend verteilt über das Becken angeordnet sein, solange durch die Anordnung der Einlaufrohre 17 und den Austritt aus dem Spalt 14 der Strahl gleichmäßig über die gesamte Breite des Beckens austritt.

Die Ausführungsform der Figur 5 stellt praktisch eine Ausführungsform gemäß den Figuren 1-4, die "umgedreht" ist, für ein Nachklärbecken dar. Durch die Maßnahme nach der Erfindung stellt sich am Ablauf, gegenüber 180 mg/l Rückstand bisher, nunmehr einer von 5 mg/l beispielsweise ein.

## Patentansprüche

1. Einlaufvorrichtung zur Beschickung von Flachsandfängen mit Abwasser mit einer Zuleitung in und einer Ableitung aus einem rechteckigen Becken, dadurch gekennzeichnet, daß der Zulauf zum Becken als Einlaufkammer (2) mit einer Bodenplatte (6) ausgebildet ist, an der eine über die gesamte Sandfangbreite gehende ihr gegenüber verstellbare Steuerplatte (4) gelagert ist, die mit einem ihr horizontal gegenüberliegend angeordneten Umlenkzylinder einen verstellbaren Auslaufspalt (3) bildet.

2. Einlaufvorrichtung nach Anspruch 1, dadurch gekennzeichnet, daß die Einlaufkammer im Bereich des Umlenkzylinders nach oben hin (7) geschlossen ist.

3. Einlaufvorrichtung nach einem der vorhergehenden Ansprüche, dadurch gekennzeichnet, daß der Umlenkzylinder (5) über die Breite des Sandfanges als eigener Körper ausgebildet ist.

4. Einlaufvorrichtung nach einem der vorhergehenden Ansprüche, gekennzeichnet durch Ausnutzung des Coanda-Effektes, derart, daß eine Umlenkung des horizontal in die Vorkammer (2) einfliessendes Abwassers zunächst vertikal nach unten und dann wieder zumindest in die Horizontale oder vertikal nach oben erfolgt.

5. Einlaufvorrichtung nach einem der vorhergehenden Ansprüche, dadurch gekennzeichnet, daß der Umlenkwinkel β des Umlenkzylinders (5) bzw. Umlenkkörpers in der Auslegung vorgebbar ist und der Umlenkzylinder bis zum geometrischen Ablösepunkt gegebenenfalls kalottenartig abgeschnitten ausgebildet ist.

6. Einlaufvorrichtung nach einem der vorhergehenden Ansprüche, gekennzeichnet durch Steuerplatten (4) unterschiedlicher Größe und Form zu Veränderung der Austrittsfläche des Auslaufspaltes (3).

7. Einlaufvorrichtung nach einem der vorhergehenden Ansprüche, dadurch gekennzeichnet, daß in der Einlaufkammer (2) vor dem Auslaufspalt (3) ein Rechen (8) angebracht ist.

8. Einlaufvorrichtung nach einem der vorhergehenden Ansprüche, gekennzeichnet durch eine Strömungsführung der flüssigen Phase horizontal in die Einlaufkammer zunächst parallel der Bodenplatte und dann durch den Auslaufspalt (2) nach unten, den Umströmungszylinder bis zum geometrischen Ablösepunkt umströmend, und dann gegebenenfalls anschließend nach oben und schließlich die ursprüngliche horizontale Einlaufrichtung zum und durch den Ablauf gewinnend geht, wobei die mineralische Phase unter dem Einfluß von Schwerkraft und Zentrifugalbeschleunigung sich nach unten hin abtrennt.

9. Einlaufvorrichtung, insbesondere zur Beschickung von Absetzbecken (Klärbecken), unter Ausnutzung des Coanda-Effekts, mit Abwasser mit einer Zuleitung am Boden des Beckens in und einer Ableitung aus einem rechteckigen Becken wobei der Zulauf zum Becken als Einlaufkammer (12) ausgebildet ist, an deren Ausgang eine über die gesamte Absetzbeckenbreeite gehende ihr gegenüber verstellbare Steuerplatte (13) gelagert ist, die mit einem ihr horizontal gegenüberliegend angeordneten nach oben gehenden und von der Zuleitung (17) weggerichteten Umlenkbogen (15) einen verstellbaren Auslaufspalt (14) bildet.

10. Einlaufvorrichtung nach Anspruch 9, dadurch gekennzeichnet, daß der Umlenkbogen (15) über die Breite des Absetzbeckens als eigener Körper ausgebildet ist.

11. Einlaufvorrichtung nach einem der Ansprüche 9-10, gekennzeichnet durch Ausnutzung des Coanda-Effektes, derart, daß eine Umlenkung des horizontal in die Vorkammer (12) einfließenden Abwassers zunächst vertikal nach oben und dann wieder zumindest in die Horizontale oder vertikal nach unten erfolgt.

12. Einlaufvorrichtung nach einem der Ansprüche 9-11, dadurch gekennzeichnet, daß der Umlenkwinkel β des Umlenkbogens (15) bzw. Umlenkkörpers veränderbar ausgebildet ist und der Umlenkbogen bis zum geometrischen Ablösepunkt verlaufend ausgebildet ist.

13. Einlaufvorrichtung nach einem der Ansprüche 9-12, gekennzeichnet durch Steuerplatten (13) unterschiedlicher Größe und Form zur Veränderung der Austrittsfläche des Auslaufspaltes (14).

14. Einlaufvorrichtung nach einem der Ansprüche 9-13, dadurch gekennzeichnet, daß die Einlaufkammer (12) in unterschiedlicher Größe und Form auslegbar ausgebildet ist.

15. Verfahren zur Beschickung von Flachsandfängen mit Abwasser, unter Ausnutzung des Coanda-Effekts, aus einem Zulauf, dadurch gekennzeichnet, daß das Abwasser aus dem Zulauf über unter gleichmäßigem Horizontalabstand angeordnete Einlaufrohre einer insbesondere über die gesamte Beckenbreite gehenden Einlaufkammer zugeführt wird und aus dieser als Spaltströmung gleichmäßig vom Zulauf abgewendet herausgeführt wird, wobei der Coanda-Effekt zur verzögerten gleichmäßigen Einleitung in das Becken und zur Trennung der in der flüssigen Phase mitgeführten mineralischen Bestandteile herangezogen wird; und daß die Flüssigkeitsspaltströmung an einem konvex gekrümmten Körper angelegt wird.

16. Verfahren zur Beschickung von Absetzbecken (Nachklärbecken) mit Abwasser, unter Ausnutzung des Coanda-Effekts, aus einem Zulauf am Boden des Beckens über unter gleichmäßigem Horizontalabstand angeordnete Einlaufrohre einer insbesondere über die gesamte Beckenbreite gehenden Einlaufkammer zugeführt wird und aus dieser als Spaltströmung gleichmäßig an einem dem Zulauf abgewendeten Ort herausgeführt wird, wobei der Coanda-Effekt zur verzögerten gleichmäßigen Einleitung in das Becken herangezogen wird und an einem konvex gekrümmten nach oben gehenden Umlenkbogen angelegt wird.

17. Anwendung der Einlaufvorrichtung zur Beschickung von Flachsandfängen nach einem der Ansprüche 1-8 und Absetzbecken/Nachklärbecken nach einem der Ansprüche 9-13 auf Abwasserkläranlagen.

18. Anwendung des Verfahrens zur Beschickung von Flachsandfängen bzw. Absetzbecken/Nachklärbecken nach einem der Ansprüche 15-16 auf den Betrieb von Abwasserkläranlagen.

## Claims

1. Inlet device for charging shallow grit chambers with waste water having a feed line into, and a drain line out of, a rectangular tank, characterized in that the feed to the tank is constructed as an inlet chamber (2) having a base plate (6) on which a control plate (4) extending over the entire grit chamber width and adjustable with respect to it is mounted and forms an adjustable outlet gap (3) with a deflection cylinder horizontally arranged opposite to it.

2. Inlet device as claimed in claim 1, characterized in that the inlet chamber is closed in the upward direction (7) in the region of the deflection cylinder.

3. Inlet device as claimed in one of the preceding claims, characterized in that the deflection cylinder (5) is constructed as a separate body over the width of the grit chamber.

4. Inlet device as claimed in one of the preceding claims, characterized by utilizing the Coanda effect in such a way that the waste water flowing horizontally into the pre-chamber (2) is first deflected vertically downwards and then at least into the horizontal or vertically upwards again.

5. Inlet device as claimed in one of the preceding claims, characterized in that the deflection angle β of the deflection cylinder (5) or of the deflection body can be altered during constructing and the deflection cylinder optionally is constructed as cut off in segment fashion up to the geometrical flow separation point.

6. Inlet device as claimed in one of the preceding claims, characterized by control plates (4) of different dimension and form for altering the exit area of the outlet gap (3).

7. Inlet device as claimed in one of the preceding claims, characterized in that a rake (8) is arranged in the inlet chamber (2) upstream of the outlet gap (3).

8. Inlet device as claimed in one of the preceding claims, characterized by guiding the flow of the liquid phase horizontally into the inlet chamber, first parallel to the base plate and then downwards through the outlet gap (2), flowing around the deflection cylinder to the geometrical flow separation point and then optionally upwards and finally regaining the original horizontal inlet direction and through the drain, in which process the mineral phase separates downwards under the influence of gravity and centrifugal acceleration.

9. Inlet device, particularly for charging settling tanks (sedimentation basins), utilizing the Coanda effect with waste water and having a feed into at the bottom, and a drain line out of, a rectangular tank, wherein the feed to the tank is constructed as an inlet chamber (12), at whose outlet a control plate (13) which extends over the entire settling tank width and is adjustable with respect to it, is mounted which with a deflection arc (15) arranged horizontally opposite to it and going upwardly and being directed away from the feed line (17) forms an adjustable outlet gap (14).

10. Inlet device as claimed in claim 9, characterized in that the deflection arc (15) over the width of the settling tank is in the form of a separate body.

11. Inlet device as claimed in either of the claims 9 - 10, characterized in that the Coanda effect is utilized in such a way that the waste water flowing horizontally into the pre-chamber (12) is first deflected vertically upwards and then at least into the horizontal or vertically downwards again.

12. Inlet device as claimed in any of claims 9 - 11, characterized in that the deflection angle β of the deflection arc (15) respectively of the deflection body is of a construction to be modifiable and that the deflection arc (15) is constructed running up to the geometrical flow separation point.

13. Inlet device according to any of claims 9 - 12, characterized by control plates (13) of variable size and form for altering the outlet surface of the outlet gap (14).

14. Inlet device as in any of claims 9 - 13 characterized in that the inlet chamber (12), is constructable to be of different size and shape.

15. Method for charging of shallow grit chambers with waste water utilizing the Coanda effect, from a feed, characterized in that the waste water is fed from the feed via inlet pipes arranged at uniform horizontal spacing to an inlet chamber extending, in particular, over the entire tank width and is brought out of the latter uniformly as a gap flow, uniformly turned from the feed, the Coanda effect being utilized for the decelerated uniform introduction into the basin and for separation of the mineral components entrained in the liquid phase; and that the liquid gap flow is applied to a convexly curved body.

16. Method for charging of settling tanks (final sedimentation basins) with waste water, utilizing the Coanda effect, from a feed at the bottom of the basin by means of inlet pipes uniformly arranged horizontally spaced from each other to an inlet chamber particularly covering the whole width of the basin and from which it is led outward in the shape of a gap flow uniformly at a place turned from the feed, the Coanda effect being utilized for decelerated uniform feed into the basin and is applied to a convexly curved deflection arc (15) leading upwardly.

17. Applying the inlet device for charging of shallow grit chambers according to one of claims 1 to 8 and settling tanks / final sedimentation basins according to one of claims 9/13, to waste water clarification plants.

18. Applying the method for charging of shallow grit tanks respectively sedimentation tanks / final sedimentation basins according to one of claims 15/16 to the operation of waste water settling plants.

## Revendications

1. Dispositif d'arrivée, pour introduire des eaux résiduaires dans des dessableurs plats, avec une conduite d'amenée pénétrant dans un bassin rectangulaire et une conduite de décharge sortant de ce bassin, caractérisé en ce que l'entrée dans le bassin est conçue comme une chambre d'arrivée (2), comportant une plaque de fond (6), contre laquelle est logée une plaque de commande (4), passant sur toute la largeur du dessableur, et dont la position peut être ajustée par rapport à cette dernière, plaque de commande qui, avec un cylindre de renvoi, disposée horizontalement en un point qui lui est opposé, forme une fente de déversement (3) réglable.

2. Dispositif d'arrivée selon la revendication 1, caractérisé en ce que la chambre d'arrivée est fermée vers le haut (7) dans la zone du cylindre de renvoi.

3. Dispositif d'arrivée selon l'une des revendications précédentes, caractérisé en ce que le cylindre de renvoi (5) est, sur toute la largeur du sableur, réalisé sous forme d'un objet particulier.

4. Dispositif d'arrivée selon l'une des revendications précédentes, caractérisé par l'utilisation de l'effet Coanda, par le fait qu'un renvoi des eaux résiduaires s'écoulant horizontalement dans le bac d'arrivée de l'eau a lieu d'abord verticalement vers le bas, puis de nouveau vers le haut, au moins à l'horizontale ou à la verticale.

5. Dispositif d'arrivée selon l'une des revendications précédentes, caractérisé en ce que l'angle de renvoi β du cylindre de renvoi (5) ou du corps de renvoi peut être prédéfini, et le cylindre de renvoi est, jusqu'au point de décollement géométrique, conçu éventuellement découpé en forme de calotte.

6. Dispositif d'arrivée selon l'une des revendications précédentes, caractérisé par des plaques de commande (4), ayant une forme et une grandeur variables, pour modifier l'aire de sortie de la fente de déversement (3).

7. Dispositif d'arrivée selon l'une des revendications précédentes, caractérisé en ce qu'une grille (8) est rapportée dans la chambre d'arrivée (2), en avant de la fente de déversement (3).

8. Dispositif d'arrivée selon l'une des revendications précédentes, caractérisé par un guidage de l'écoulement de la phase liquide horizontalement dans la chambre d'arrivée, tout d'abord parallèlement à la plaque de fond, puis, en passant par la fente de déversement (2), vers le bas, en passant autour du cylindre de renvoi jusqu'au point de décollement géométrique, puis éventuellement immédiatement vers le haut, et finalement gagne le dispositif d'arrivée, horizontal initial, pour aller vers le déversement en passant par ce dernier, où la phase minérale, sous l'influence de la force de gravité et de l'accélération centrifuge, se sépare vers le bas.

9. Dispositif d'arrivée, en particulier pour introduire des eaux résiduaires dans des bassins de décantation (bassins de clarification), par utilisation de l'effet Coanda, avec une conduite d'amenée, au fond du bassin, pénétrant dans un bassin rectangulaire, et une conduite de décharge, sortant de ce bassin rectangulaire, ce dernier servant de chambre d'arrivée (12), à la sortie de laquelle est logée une plaque de commande (13), passant sur toute la largeur du bassin de décantation, et dont la position peut être modifiée par rapport à cette dernière, plaque de commande qui, avec un coude de renvoi (15), disposé en étant opposé par rapport à elle, dirigé vers le haut et éloigné de la conduite d'amenée (17), forme une fente de déversement (14) réglable en position.

10. Dispositif d'arrivée selon la revendication 9, caractérisé en ce que le coude de renvoi (15) est, sur toute la largeur du bassin de décantation, conçu comme un objet particulier.

11. Dispositif d'arrivée selon l'une des revendications 9-10, caractérisé par l'utilisation de l'effet Coanda, par le fait qu'un renvoi des eaux résiduaires pénétrant horizontalement dans le bac d'arrivée de l'eau (12) a lieu d'abord verticalement vers le haut, puis, de nouveau au moins à l'horizontale ou à la verticale, vers le bas.

12. Dispositif d'arrivée selon l'une des revendications 9-11, caractérisé en ce que l'angle de renvoi β du coude de renvoi (15) ou du corps de renvoi est conçu de façon à pouvoir être modifié, et le coude de renvoi est conçu de façon à courir jusqu'au point de décollement géométrique.

13. Dispositif d'arrivée selon l'une des revendications 9-12, caractérisé par des plaques de commande (13) ayant une taille et une forme différentes, pour modifier l'aire de sortie de la fente de déversement (14).

14. Dispositif d'arrivée selon l'une des revendications 9-13, caractérisé en ce que la chambre d'arrivée (12) est conçue de façon à pouvoir avoir une forme et une taille différentes.

15. Procédé pour introduire des eaux résiduaires dans des dessableurs plats, par utilisation de l'effet Coanda, à partir d'une conduite d'amenée, caractérisé en ce que les eaux résiduaires sont, à partir d'une conduite d'amenée, et en passant par des tuyaux d'entrée disposés à une distance horizontale uniforme, envoyés à une chambre d'arrivée, passant en particulier sur toute la largeur du bassin, et, à partir de cette dernière, ressort uniformément sous forme d'un écoulement divisé, détourné par rapport à la conduite d'amenée, où l'effet Coanda est utilisé pour une introduction uniforme et retardée dans le bassin, et pour séparer les constituants minéraux entraînés dans la phase liquide ; et que l'écoulement divisé de liquide s'appuie contre un corps ayant une courbure convexe.

16. Procédé pour introduire des eaux résiduaires dans des bassins de décantation (bassins de décantation secondaire), par utilisation de l'effet Coanda, caractérisé en ce que les eaux résiduaires sont, à partir d'une conduite d'amenée située au fond du bassin, et en passant par des tuyaux d'entrée disposés à une distance horizontale uniforme, envoyés à une chambre d'arrivée, passant en particulier sur toute la largeur du bassin, et, à partir de cette dernière, ressort sous forme d'un courant divisé, uniformément jusqu'à un point éloigné du tuyau d'amenée, où l'effet Coanda est utilisé pour une introduction uniforme et retardée dans le bassin, et est appliqué à un coude de renvoi, allant vers le haut d'une manière incurvée convexe.

17. Utilisation du dispositif d'arrivée pour alimenter des dessableurs plats selon l'une des revendications 1-8 et des bassins de décantation/de décantation secondaire selon l'une des revendications 9-13, sur des installations de décantation d'eaux résiduaires.

18. Utilisation du procédé d'alimentation de dessableurs plats ou de bassins de décantation/de décantation secondaire selon l'une des revendications 15-16, lors de l'exploitation d'installations de décantation d'eaux résiduaires.
